(19) Europäisches Patentamt
European Patent Office
Office européen des brevets

(11) **EP 2 212 102 B1**

(12) **EUROPEAN PATENT SPECIFICATION**

(45) Date of publication and mention
of the grant of the patent:
**17.04.2013 Bulletin 2013/16**

(21) Application number: **07858982.7**

(22) Date of filing: **28.11.2007**

(51) Int Cl.:
**B29D 30/36** (2006.01)   **B29D 30/20** (2006.01)

(86) International application number:
**PCT/IB2007/003809**

(87) International publication number:
**WO 2009/068933 (04.06.2009 Gazette 2009/23)**

(54) **METHOD FOR MANUFACTURING TYRES FOR VEHICLE WHEELS**

VERFAHREN ZUR HERSTELLUNG VON REIFEN FÜR FAHRZEUGRÄDER

PROCÉDÉ DE FABRICATION DE PNEUS POUR ROUES DE VÉHICULE

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**04.08.2010 Bulletin 2010/31**

(73) Proprietor: **Pirelli Tyre S.P.A.**
**20126 Milan (IT)**

(72) Inventors:
• **CANTU', Marco**
**I-20126 Milano (IT)**
• **MARCHINI, Maurizio**
**I-20126 Milano (IT)**
• **AMURRI, Cesare, Emanuele**
**I-20126 Milan (IT)**

(74) Representative: **Tansini, Elio Fabrizio et al**
**BUGNION S.p.A.**
**Viale Lancetti 17**
**20158 Milano (IT)**

(56) References cited:
EP-A- 0 264 506    EP-A- 1 186 401
EP-A- 1 632 336    EP-A- 1 666 236
WO-A-00/30838    GB-A- 802 898
JP-A- 9 239 861    US-A- 4 065 338
US-B1- 6 261 399    US-B1- 6 482 282

## Description

The invention relates to a method of manufacturing tyres for vehicle wheels.

In more detail, the invention applies to the manufacture of tubular structures designed to define some tyre components.

Preferably, such components can be selected from liner, under-liner, tread band, under-layer of the tread band, under-layer of the belt structure, at least one sidewall portion.

A tyre for vehicles generally comprises a carcass structure provided with at least one carcass ply having respectively opposite end flaps in engagement with respective annular anchoring structures, integrated into the regions usually identified as "beads", which have an inner diameter substantially corresponding to a so-called "fitting diameter" of the tyre on a respective mounting rim.

Associated with the carcass structure is a belt structure comprising one or more belt layers, located in radially superposed relationship with respect to each other and to the carcass ply.

Each belt layer can have textile or metallic reinforcing cords with a crossed orientation and/or substantially parallel to the circumferential extension direction of the tyre (zero-degree layer).

A tread band is applied at a radially external position to the belt structure, said tread band too being made of elastomeric material like other semifinished products constituting the tyre.

Respective sidewalls of elastomeric material are also applied at an axially external position, onto the side surfaces of the carcass structure, each extending from one of the side edges of the tread band until close to the respective annular anchoring structure to the beads.

In tyres of the "tubeless" type, an airtight coating layer of elastomeric material, usually referred to as "liner", covers the radially internal surfaces of the tyre, another layer of elastomeric material as well, and usually referred to as "under-liner" generally overlapping said liner at a radially external position.

Within the present specification and the following claims, by the term "elastomeric material" it is intended a compound comprising at least one elastomeric polymer and at least one reinforcing filler. Preferably, this compound further comprises additives such as cross-linking agents and/or plasticizers. Due to the presence of the cross-linking agents, this material can be cross-linked by heating, so as to form the final article of manufacture.

In traditional processes for tyre manufacture, the carcass structure and belt structure together with the respective tread band are provided to be made separately from each other by assembly of semifinished components in respective work stations, to be then mutually assembled at a second time, as described in document US 3,990,931 for example.

Document US 4,065,338 discloses a raw pneumatic tire carcass having an uncured, elastomeric, annular body and an uncured, elastomeric, liner superposed upon and affixed to the internal surface of the body. The liner in one form thereof includes bead-communicating recesses for venting fluid from between the liner and an inflatable bladder used in a mold for effecting inflation of the body and liner from a cylinder to a torus. The liner in the latter form is constituted of an appropriate thermoplastic material which, when engaged and inflated by a smooth surface of the bladder and vulcanized, undergoes a transformation in which the recesses gradually disappear substantially and are transformed into a correspondingly smooth surface. A second form of the liner (which is preferably incorporated as part of the first said form of the liner) is represented by a convexity on at least one surface of the liner. The convexity serves to prevent an excessive reduction in thickness that the liner otherwise undergoes in the crown region thereof when inflated from a cylinder to a torus.

Document US 6,482,282 discloses a method of preparing a cylindrical-shaped innerliner for storage. The method involves converting the innerliner from a cylinder into a solid torodially-shaped donut.

Document WO00/30838 discloses a method for providing precured innerliners having a predetermined cross sectional profile for use as part of a pneumatic tire assembly used in a bladder-less shaping and vulcanizing mold. The innerliner is formed from a continuous strip of elastomeric material hot formed using a calender assembly with a profiled calender roller. The formed strip is cured "inline" in a press having a profile matching platen before being wound onto a tire building drum. After the pneumatic tire assembly is completed, the assembly is shaped and cured in a bladder-less mold, utilizing the precured innerliner as the impervious inner layer. Initially, the center region of the innerliner is at least twice as thick as the lateral regions. In the finished pneumatic tire, the innerliner exhibits a uniform thickness.

Document EP0264506 discloses a tubeless pneumatic tire including an inner liner having puncture-sealing characteristics, the inner liner being a puncture-sealing laminate having an outer halobutyl polymer-containing layer and an inner polymer-containing layer, the inner layer of the laminate having been reacted with a zinc peroxide compound.

Document US 6,261,399 discloses a tire construction and method of making same wherein the uncured elastomeric material that is laid upon the tire building drum during building of the tire preform will not experience subtantially meridional stretch which would otherwise cause a decrease in the uniformity of ply thickness during expansion of the preform in the vulcaninzing mold.

Document JP9239861 discloses that in the manufacture of a pneumatic tire by forming an inner liner of air impermeable unvulcanized rubber on the inside of the tire, the inner liner is constituted so that the wall thickness on the bead part side is thinner than the wall thickness of in its crown part, and the ratio of the wall thickness of the crown part to the wall thickness of the bead part is made 1.3-2.3.

In relatively recent times, production processes have been developed which are such conceived as to avoid production and storage of semifinished products. For instance, in document WO 01/36185 in the name of the same Applicant, a robotized arm carries a toroidal support on which each of the components of a tyre under production is directly made. The robotized arm gives the toroidal support a circumferential-distribution motion around the geometric axis thereof, simultaneously with controlled transverse-distribution displacements in front of a delivery member supplying a continuous elongated elements of elastomeric material. The continuous elongated element therefore forms a plurality of coils the orientation and mutual-overlapping parameters of which are such managed as to control the thickness variations to be given to a component of a tyre being manufactured, based on a predetermined laying scheme preset on an electronic computer.

The Applicant has noticed that in processes of the type shown in US 3,990,931, the carcass structure, belt structure and tread band can be manufactured around respective drums of substantially cylindrical conformation and generally comprise one or more tubular structures of elastomeric material such as liner, under-liner of the carcass structure, under-layer of the belt structure, at least one sidewall portion, under-layer of the tread band and the tread band itself, as it is a tubular structure of elastomeric material too.

In addition, the Applicant has observed that in particular one or more of said tubular structures can be made by laying a continuous elongated element of elastomeric material around a forming drum during the so-called "spiralling" step, as disclosed in WO 01/36185.

The Applicant has also noticed that in building processes like the one disclosed in US 3,990,931, the assembling step between carcass structure, belt structure and tread band takes place by an outwardly-directed radial stressing action, through inflation for example, so as to obtain, in addition to assembly, the toroidal profile of the built green tyre ("shaping" step).

The Applicant has also noticed that, following said stressing action, the axially external portions of the carcass structure, i.e. the closest portions to the axial ends of the carcass structure, are substantially only submitted to a rotation-translation action, while the axially internal portions of the carcass structure are submitted to an important circumferential deformation due to the geometric modification imposed by the shaping step that mainly results in an increase in the diameter of the carcass structure itself.

The Applicant therefore, after completion of the shaping step, could find a lack of homogeneity in the thickness of the deformed carcass structure, that could be estimated by observing a section in a radial plane of the carcass structure itself.

In particular, the axially internal portions have a smaller thickness than the axially external portions being the closest to the axial ends of the carcass structure.

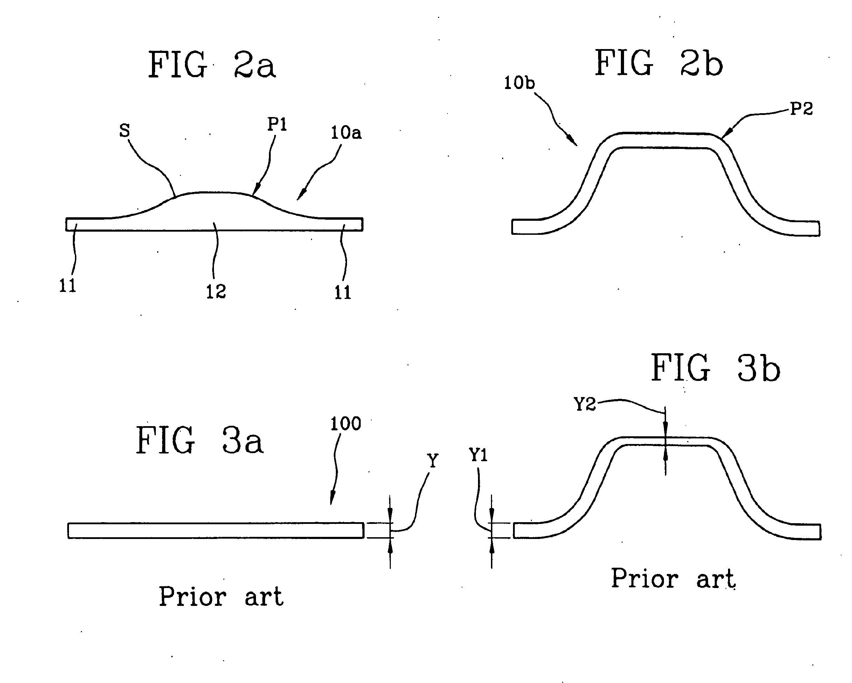

Figs. 3a and 3b diagrammatically show what has been hitherto described: Fig. 3a diagrammatically shows.the section of a half of a tubular structure 100 having a substantially constant starting thickness Y; Fig. 3b is again a section view of the same half of the tubular structure 100 after the shaping step, in which lack of homogeneity in the thickness Y1, Y2 of the deformed structure is highlighted.

The Applicant has noticed that this deformation phenomenon can be of importance as regards said carcass structure, with particular reference to the previously described tubular structures such as liner and under-liner.

The Applicant has also noticed that, although to a smaller degree, the lack of homogeneity in thickness is also present in the belt structure and tread band; in the last-mentioned cases the deformation is of less amount due to the fact that the shape of the belt structure and tread band before the shaping step is not too different from that they take at the end of said shaping step, which means that the deformation to which they are submitted is smaller than that experienced by the carcass structure.

The Applicant has also found that said lack of homogeneity appearing in the thickness of said tubular structure, with particular reference to the tubular structures that can be present in the carcass structure such as liner and under-liner, can cause serious drawbacks both during the shaping step where tearing and/or micropunctures at the portions of lower thickness may occur, and subsequently with reference to the quality and performance of the tyre during use. The Applicant has finally verified that this phenomenon can be more apparent where said tubular structures are built by winding and superposition of coils of a continuous elongated element on a forming drum.

The Applicant has perceived that, in order to avoid this lack of homogeneity, the thickness variation of each tubular structure can be determined a priori, according to suitable mathematical models, and can be also compensated for by making a tubular structure with an imposed variable thickness.

In more detail, in accordance with the invention, the Applicant has found that, after determining the deformations to which the tubular structure will have to be submitted, it is possible to calculate the profile that the thickness of the tubular structure must have in order that, following the shaping step, a deformed structure with a substantially even thickness is obtained, after defining the profile thickness that the tubular structure must have before the deformation resulting from the shaping step, manufacture of the tubular structure having such a profile is started.

In particular, the present invention relates to a method of manufacturing tyres for vehicle wheels, as defined in claim 1. Preferred embodiments of the invention are defined in the dependent claims.

In the tyre thus manufactured one or more tubular structures are present that have a profile the thickness of which is compatible with the design specifications, without unevennesses that can lead to discard the tyre or to a reduction in the tyre performance.

The present invention, in the above mentioned aspects, can have at least one of the following preferred features.

According to a preferred embodiment, said thickness has a variation included between about 0.01% and about 5%.

More preferably, said thickness has a. variation included between about 0.01% and about 2%. Preferably, said profile is of such a nature that the tubular structure, prior to the shaping step of the carcass structure, has a thickness at its axially external ends, smaller than the thickness of an axially internal portion thereof.

As above discussed, in fact, the axially internal portion of the tubular structure is the one submitted to deformations, and in particular to thickness reductions, of greater extent; thus, by increasing the starting thickness of said axially internal portion, a substantially constant thickness is obtained after carrying out the shaping step on the carcass structure.

Preferably, the above mentioned tubular structure is a liner belonging to said carcass structure.

Preferably, the above mentioned tubular structure is an under-liner belonging to said carcass structure.

Preferably, the above mentioned tubular structure is an under-layer of the belt structure.

Preferably, the above mentioned tubular structure is at least one sidewall portion.

Preferably, the above mentioned tubular structure is an under-layer of the tread band.

Preferably, the above mentioned tubular structure is the tread band.

Preferably, the tubular structure is manufactured by laying a continuous elongated element of elastomeric material on a substantially cylindrical forming drum, which elongated element defines a succession of coils around said drum.

More preferably, said starting thickness therefore can be obtained by varying the mutual overlapping of said coils along the axial extension of the tubular structure.

In addition or as an alternative, this thickness can be obtained by varying along the axial extension of the tubular structure, the tension with which the continuous elongated element is laid on the forming drum.

According to a preferred embodiment, the starting thickness is determined as a function of the starting radius of said undeformed tubular structure and of a radius of said deformed tubular structure, following said shaping step.

Preferably, said starting thickness is determined as a function of a difference in the absolute value between a starting radius of said tubular structure, estimated at a starting volume element being part of said tubular structure, and a radius of said deformed structure, estimated at a deformed volume element obtained from deformation of said starting volume element.

Alternatively, said starting thickness is determined as a function of a ratio of a starting radius of said tubular structure estimated at a starting volume element being part of said tubular structure, to a radius of said deformed structure, estimated at a deformed volume element obtained from deformation of said starting volume element.

More preferably, said starting thickness is determined according to the relation:

$$S_1 = S_2 \cdot \frac{R2}{R1}$$

therein:

$S_1$ is the thickness of the undeformed volume element;

$S_2$ is the thickness of the deformed volume element; R1 is the starting radius of the undeformed tubular structure estimated at the undeformed volume element; R2 is the radius of the deformed tubular structure estimated at the deformed volume element.

Alternatively, said starting thickness is determined according to the relation:

$$S_1 = S_2 \cdot \sqrt{\frac{R2}{R1}}$$

wherein:

$S_1$ is the thickness of the undeformed volume element;

$S_2$ is the thickness of the deformed volume element; R1 is the starting radius of the undeformed tubular structure estimated at the undeformed volume element; R2 is the radius of the deformed tubular structure estimated at the deformed volume element.

According to a preferred embodiment, said step c) takes place following said step b) by directly building said tread band over said belt structure.

Alternatively, said step c) takes place after said step d) by directly building said tread band over said belt structure having a toroidal conformation and already associated with said carcass structure.

Preferably, in said step d) said carcass structure by taking a toroidal conformation is associated with the belt structure - tread band assembly.

Further features and advantages will become more apparent from the detailed description of a preferred but not exclusive embodiment of a method of manufacturing tyres for vehicle wheels in accordance with the present invention.

This description will be set out hereinafter with reference to the accompanying drawings, given by way of non-limiting example, in which:

- Fig. 1 shows a tyre manufactured with the method in accordance with the present invention;
- Figs. 2a and 2b show a section view in a radial plane of part of a tubular structure used in the method of the invention, before and after the step of shaping the carcass structure, respectively;
- Figs. 3a and 3b show a section view in a radial plane of part of a tubular structure in accordance with the known art, before and after the step of shaping the carcass structure, respectively;
- Fig. 4 diagrammatically shows a first embodiment for the tubular structure in Fig. 2a;
- Fig. 5 diagrammatically shows a second embodiment for the tubular structure in Fig. 2a;
- Fig. 6 diagrammatically and simultaneously reproduces Figs. 2a and 2b, highlighting therein some calculation quantities used in the method of the invention.

With reference to the cited drawings, a tyre for vehicle wheels obtained by adopting the method in accordance with the invention has been generally identified with reference numeral 1.

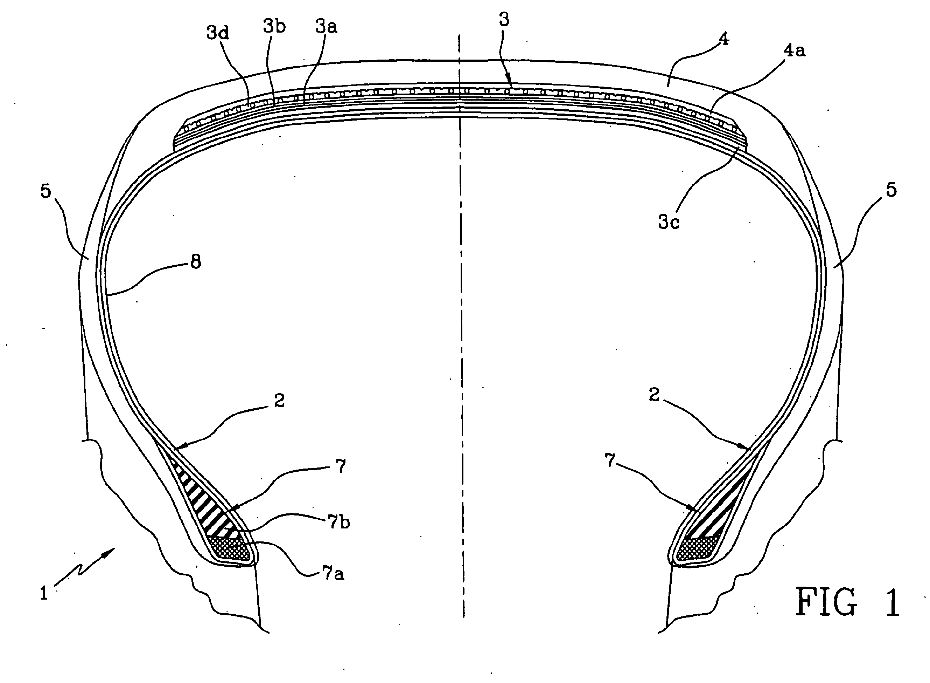

Tyre 1 (Fig. 1) comprises a carcass structure 2 formed of one or more carcass plies having the respective opposite end flaps in engagement with annular reinforcing structures 7 integrated into circumferential regions internal to tyre 1, usually identified with the name of "beads".

Each annular reinforcing structure 7 comprises one or more substantially inextensible annular inserts 7a and one or more filling inserts 7b coupled to the carcass plies.

At a radially external position to the carcass structure 2, a belt structure 3 is applied and it comprises one or more belt layers 3a, 3b having respectively crossed reinforcing cords, and a possible auxiliary belt layer 3d comprising one or more generally rubberised cords made of textile or metallic material, spirally wound up around the geometric axis of tyre 1.

Interposed between the carcass structure 2 and said belt layers 3a, 3b is an under-layer of the belt structure 3c, made of elastomeric material.

Tyre 1 further comprises a tread band 4 applied at a radially external position to the belt structure 3; an under-layer 4a of the tread band made of elastomeric material can be applied between the belt structure 3 and tread band 4.

Preferably tyre 1 further comprises a pair of abrasion-proof inserts (not shown) that are each externally applied close to one of the tyre beads 7, and a pair of sidewalls 5 each of which covers the carcass structure 3 at a laterally external position.

The carcass structure 2 can be internally coated with a so-called "liner" 8, i.e. a thin layer of elastomeric material that, when vulcanisation is over, will be airtight so as to ensure maintenance of the inflation pressure of tyre 1 in use.

A so-called under-liner of elastomeric material can be further interposed between liner 8 and the carcass plies. The method in accordance with the invention comprises the steps of building a carcass structure 2, building a belt structure 3, and building a tread band 4; said carcass structure 2, belt structure 3 and tread band 4 are then mutually associated in order to obtain tyre 1. It will be appreciated that sidewalls 5 can be built during building of the carcass structure 2, during building of the tread band 4, or partly during building of the carcass structure 2 and partly during building of the tread band 4.

In more detail, at least one of the carcass structure 2, belt structure 3 and tread band 4 may comprise a tubular structure 10a of elastomeric material.

Preferably, the tubular structure 10a is a liner 8 belonging to said carcass structure 2, an under-liner belonging to said carcass structure 2, or an under-layer 3c of the belt structure 3, at least one sidewall portion belonging to the carcass structure 2 or to the tread band 4, an under-layer 4a of the tread band 4, or the tread band 4 itself.

The Applicant has found that particularly advantageous results in applying the method being the object of the present invention are obtained where said tubular structure 10a is part of the carcass structure 2, and in particular where it constitutes liner 8 and/or the under-liner.

The method further comprises a step of shaping the carcass structure 2 into a toroidal conformation to associate it with at least the belt structure 3 by exerting a radial deformation force directed from the inside to the outsides of the carcass structure 2 itself.

Preferably, the radial deformation force can be obtained by inflation of the carcass structure 2.

By this shaping step, therefore, the dual result is obtained of mutually engaging the carcass structure 2 and belt structure 3 and of giving the semifinished product thus obtained the toroidal shape that tyre 1 must take.

In order to obtain, following the shaping step, a deformed structure having a substantially even thickness in a section taken in a radial plane of the tubular structure, the method of the invention comprises a step of determining, before building of said tubular structure 10a, a suitable profile P1 of the tubular structure 10a itself, defined by a respective starting thickness S.

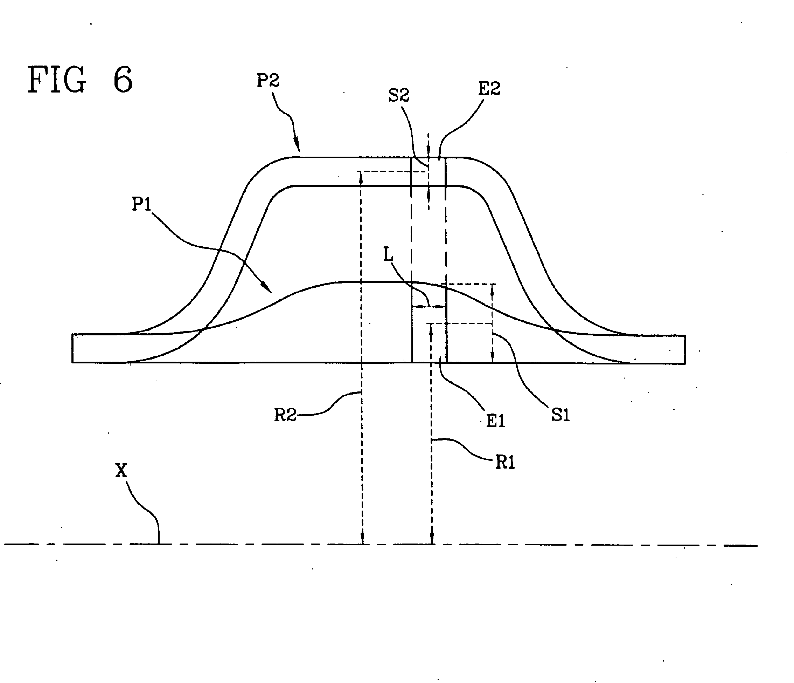

Determination of this profile P1 can be carried out by acting, by way of example, in the following manner, with reference to Fig. 6 diagrammatically showing, in a section view taken in a radial plane, the profiles of the same half of the tubular structure before and after the step of shaping the carcass structure 2.

Denoted at 10a in Fig. 2 is the undeformed starting tubular structure, while identified with reference numeral 10b is the deformed structure resulting from the step of shaping the carcass structure 2.

The profile P2 defined after the shaping step, as above discussed, is substantially uniform, i.e. it has thickness variations included between about 0.01% and about 12%.

More preferably, said thickness variations are included between about 0.01% and about 5%.

Most preferably, said thickness variations are included between about 0.01% and about 2%.

In the following specification and in the appended claims these variations are referred to the average thickness of the profile along the axial size thereof, calculated as ("maximum thickness" + "minimum thickness) /2.

The profile P1 defined before the shaping step, on the contrary, has an imposed variable course along axis X.

Both profiles P1, P2 are divided into elementary blocks or elements; this division is quite theoretical/virtual and is exclusively aimed at the following considerations and calculations and does not represent the true structure of the two profiles.

For the sake of clarity, reference will be made hereinafter to a single volume element E1 of the starting profile P1, and to the corresponding volume element E2 of the deformed profile P2.

Let us assume that the volume element E2 is submitted to a deformation in a radial direction alone, and not in an axial direction, said axial direction being defined by axis X (Fig. 6).

The length L of the two volume elements E1, E2 measured along axis X of the tubular structure therefore can be very similar; the radial thickness S1, S2 of the two elements E1, E2 is on the contrary different.

Thickness S2 of the deformed volume element E2 is known a priori, while the unknown quantity is thickness S1 of the starting volume element E1.

In more detail, the two thicknesses S1, S2 are a function of the respective radii R1, R2 defining the distance between the geometric centres of gravity of the volume elements E1, E2 and axis X of the tubular structure 10a, 10b.

Also following the deformations to which they are submitted in the shaping step, the two volume elements E1, E2 cannot have different volumes, due to known physical laws of mass conservation.

By imposing the equality between the two volumes, it is therefore possible to determine thickness S1 of the starting and undeformed volume element E1.

Due to the above, the starting thickness of profile P1 of the tubular structure 10a can be determined as a function of the following quantities: thickness of the profile of the deformed structure, radius of the deformed structure and starting radius of the undeformed structure.

In more detail, with reference to the radius of the deformed tubular structure and the starting radius of the undeformed structure, the starting thickness can be determined as a function of a difference or a ratio between the same.

Referring to a single volume element before and after the shaping step, there is considered the starting radius R1 of the tubular structure 10a estimated at a starting volume element E1 being part of the tubular structure 10a itself, and the radius R2 of the deformed tubular structure 10b, estimated at the deformed volume element E2 obtained from deformation of said starting volume element E1.

Therefore, the starting thickness S1 can be calculated according to the relation:

$$S_1 = S_2 \cdot \frac{R2}{R1}$$

wherein:

S$_1$ is the thickness of the undeformed volume element E1;
S$_2$ is the thickness of the deformed volume element E2; R1 is the starting radius of the undeformed tubular structure 10a estimated at the volume element E1;
R2 is the radius of the deformed tubular structure 10b estimated at the deformed volume element E2.

By adopting a slightly different approach, it is possible to assume that each volume element of the tubular structure 10a is submitted to a non negligible deformation also along the axial direction X of the tubular structure 10a itself.

Following a reasoning similar to the above one, and assuming that each volume element is submitted to deformations of the same amount in an axial direction and in a radial direction, the following relation is obtained:

$$S_1 = S_2 \cdot \sqrt{\frac{R2}{R1}}$$

wherein the quantities have the same meaning as above specified.

Thus if the above considerations are extended to all the volume elements constituting the tubular structure 10a, 10b before and after the step of shaping the carcass structure 2, the course of the thickness of the starting profile P1 of the tubular structure 10a along the axial direction X of same is determined.

Preferably, profile P1 has such a starting thickness that the tubular structure 10a, prior to the shaping step, at its axially external ends 11 has a smaller thickness than the thickness of an axially internal portion 12 thereof (Figs. 2a, 2b).

In fact, the axially innermost portion 12 is the one submitted to the greatest deformation in terms of reduction in its thickness, and is therefore the one that must initially have a greater thickness.

In the preferred embodiment, the building step of the tubular structure 10a comprises a sub-step of laying a continuous elongated element 20 of elastomeric material on a forming drum of a substantially cylindrical conformation, said elongated element defining a succession of coils 21 around said drum.

In other words, during a so-called "spiralling" step, the continuous elongated element 20 is progressively wound up externally of the forming drum, the latter having a substantially cylindrical conformation.

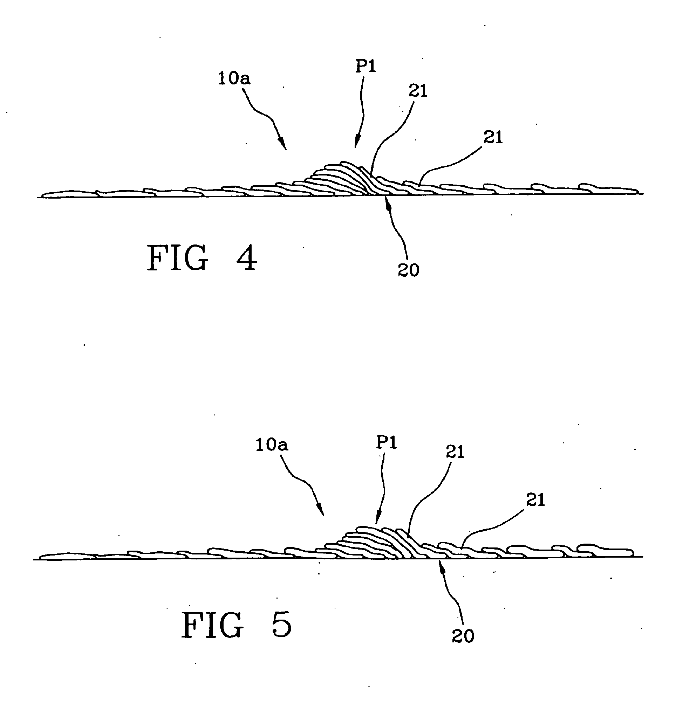

In this manner, a succession of coils 21 around the drum is defined, so as to form the tubular structure 10a (Figs. 4, 5).

The starting thickness of profile P1 of the tubular structure 10a can be defined by controlling the laying step in different ways.

For instance, the starting thickness can be obtained by varying the mutual overlapping of coils 21, along the axial extension of the tubular structure 10a. This means that, where a greater thickness is required, several coils 21 will be at least partly radially superposed, while where a smaller thickness is required, a smaller number of radially superposed coils 21 will be used (Fig. 4).

In addition or as an alternative to the above, the starting thickness of profile P1 of the tubular structure 10a can be obtained by varying a tension with which the continuous elongated element 20 is laid on the forming drum, along the axial extension of the tubular structure itself.

In fact, by increasing the tension with which the elongated element 20 is laid on the forming drum, the cross section area (i.e. evaluated in a plane orthogonal to the major longitudinal extension of the elongated element 20) of the elongated element itself is correspondingly decreased, thereby obtaining a reduction in the thickness of the respective coil 21 (Fig. 5).

Therefore, in the portion/portions of the tubular structure 10a where a smaller thickness is required, it will be necessary to increase the tension with which the elongated element 20 is laid down, while in the portion/portions where a greater thickness is required, the laying tension is to be reduced.

As above mentioned, the techniques for thickness control can be also used in combination with each other, so as to determine the starting thickness of profile P1 of the tubular structure 10a both through overlapping of coils 21 defined by the elongated element 20, and through a more or less marked tensioning of the elongated element 20 when laid down during the spiralling step.

In a different preferred embodiment, the tubular structure 10a is not made through laying of a elongated element on a forming drum, but through a calendering step, carried out by means of suitable rollers (not shown), by which step a sheet of elastomeric material having a thickness equal to said starting thickness of the profile of the tubular structure is directly obtained; then by closing said sheet and mutually engaging two opposite edges of same, a tubular structure having the desired profile is obtained.

Preferably, the step of building the tread band 4 takes place after the step of building the carcass structure 3, the thread band 4 being directly built on the belt structure 3 at a radially external position relative to the latter.

In a preferred embodiment, the step of building the tread band 4 takes place after the step of shaping the carcass structure 2, by directly building the tread band 4 over the belt structure 3 shaped into a toroidal conformation and already associated with said carcass structure 2.

In an alternative embodiment, the tread band 4 and belt structure 3 are mutually associated before the step of shaping the carcass structure 2; subsequently, during the step of shaping the carcass structure 2, the latter is associated with the assembly made up of the belt structure 3 and tread band 4.

In fact, the carcass structure 2, when submitted to the shaping step, increases its radial size and, in this manner, defines a constraint with the inner surface of the belt structure 3 that is in a radially external position relative to the carcass structure 2 itself.

**Claims**

1. A method of manufacturing tyres for vehicle wheels, said method comprising the following steps:

   a) building a carcass structure (2);
   b) building a belt structure (3);
   c) building a tread band (4);
   wherein at least one of the carcass structure (2), belt structure (3) and tread band (4) comprises a tubular structure (10a, 10b) of elastomeric material;
   d) shaping said carcass structure (2) into a toroidal conformation to associate it with at least said belt structure (3) by exerting a radial deformation force directed from the inside to the outside of said carcass structure (2);
   said method comprising the following step, during execution of at least one of steps a), b) and c):
   e) building said tubular structure (10a, 10b) in such a manner that the profile thereof, along its circumferential extension, has such a starting thickness that the deformed tubular structure (10b) following step d) has a thickness showing a variation included between about 0.01% and about 12% wherein said starting thickness of said profile (P1) is of such a nature that the tubular structure (10a), prior to step d), has a thickness at its axially external ends (11), that is smaller than the thickness of an axially internal portion (12) thereof,

wherein said step e) comprises a sub-step of laying a continuous elongated element (20) of elastomeric material on a substantially cylindrical forming drum, which elongated element defines a succession of coils (21) around said drum,

wherein said starting thickness is obtained by varying

the mutual overlapping of said coils (21) along the axial extension of the tubular structure (10a).

2. A method as claimed in claim 1, wherein said thickness has a variation included between about 0.01% and about 5%.

3. A method as claimed in claim 1, wherein said thickness has a variation included between about 0.01% and about 2%.

4. A method as claimed in anyone of claims 1 to 3, wherein the above mentioned tubular structure (10a, 10b) is a liner (8) belonging to said carcass structure (2).

5. A method as claimed in anyone of claims 1 to 3, wherein said tubular structure (10a, 10b) is an underliner belonging to said carcass structure (2).

6. A method as claimed in anyone of claims 1 to 3, wherein said tubular structure (10a, 10b) is an underlayer (3c) of the belt structure (3).

7. A method as claimed in anyone of claims 1 to 3, wherein said tubular structure (10a, 10b) is an underlayer (4a) of the tread band (4).

8. A method as claimed in anyone of claims 1 to 3, wherein said tubular structure (10a, 10b) is the tread band (4).

9. A method as claimed in anyone of claims 1 to 3, wherein said tubular structure (10a, 10b) is at least one portion of a sidewall (5).

10. A method as claimed in claim 1, wherein said starting thickness is obtained by varying along the axial extension of the tubular structure (10a), a tension with which said continuous elongated element (20) is laid on said forming drum.

11. A method as claimed in anyone of the preceding claims, wherein said starting thickness is determined as a function of the starting radius of said undeformed tubular structure (10a) and of a radius of said deformed tubular structure (10b), following said shaping step.

12. A method as claimed in claim 11, wherein said starting thickness is determined as a function of a difference in the absolute value between a starting radius (R1) of said tubular structure (10a), estimated at a starting volume element (E1) being part of said tubular structure (10a), and a radius of said deformed structure (10b), estimated at a deformed volume element (E2) obtained from deformation of said starting volume element (E1).

13. A method as claimed in claim 11, wherein said starting thickness is determined as a function of a ratio of a starting radius (R1) of said tubular structure (10a) estimated at a starting volume element (E1) being part of said tubular structure (10a), to a radius of said deformed structure (10b), estimated at a deformed volume element (E2) obtained from deformation of said starting volume element (E1).

14. A method as claimed in claim 13, wherein said starting thickness is determined according to the relation:

$$S_1 = S_2 \cdot \frac{R2}{R1}$$

wherein:
$S_1$ is the thickness of the undeformed volume element (E1);
$S_2$ is the thickness of the deformed volume element (E2);
R1 is the starting radius of the undeformed tubular structure (10a) estimated at the undeformed volume element (E1);
R2 is the radius of the deformed tubular structure (10b) estimated at the deformed volume element (E2).

15. A method as claimed in claim 13, wherein said starting thickness is determined according to the relation:

$$S_1 = S_2 \cdot \sqrt{\frac{R2}{R1}}$$

wherein:

S$_1$ is the thickness of the undeformed volume element (E1);

S$_2$ is the thickness of the deformed volume element (E2);

R1 is the starting radius of the undeformed tubular structure (10a) estimated at the undeformed volume element (E1);

R2 is the radius of the deformed tubular structure (10b) estimated at the deformed volume element (E2).

16. A method as claimed in anyone of the preceding claims, wherein said step c) takes place following said step b) by directly building said tread band (4) over said belt structure (3).

17. A method as claimed in anyone of the preceding claims, wherein said step c) takes place after said step d) by directly building said tread band (4) over said belt structure (3) having a toroidal conformation and already associated with said carcass structure (2).

18. A method as claimed in claim 16, wherein in said step d) said carcass structure (2) by taking a toroidal conformation is associated with the belt structure (3) - tread band (4) assembly.

**Patentansprüche**

1. Verfahren zum Herstellen von Reifen für Fahrzeugräder, wobei das Verfahren die folgenden Schritte umfasst:

   a) Anlegen einer Karkassenstruktur (2);
   b) Anlegen eine Gürtelstruktur (3);
   c) Anlegen eines Laufflächenbands (4);
   wobei mindestens eines von Karkassenstruktur (2), Gürtelstruktur (3) und Laufflächenband (4) eine rohrförmige Struktur (10a, 10b) aus elastomerem Material aufweist;
   d) Formen der Karkassenstruktur (2) in eine Torusgestalt, um sie mindestens mit der Gürtelstruktur (3) zu assoziieren, indem eine axiale Deformationskraft ausgeübt wird, die von der Innenseite zu der Außenseite der Karkassenstruktur (2) gerichtet ist;
   das Verfahren, während dem Ausführen von mindestens einem der Schritte a), b) und c), den folgenden Schritt umfasst:
   e) Anlegen der rohrförmigen Struktur (10a, 10b) in einer solchen Weise, dass das Profil derselben, entlang ihrer Umfangserstreckung, eine solche Anfangsdicke aufweist, dass die deformierte rohrförmige Struktur (10b) nach Schritt d) eine Dicke aufweist, die eine Variation aufzeigt, die zwischen ungefähr 0.01 % und ungefähr 12% eingeschlossen ist,
   wobei die Anfangsdicke des Profils (P1) von einer solchen Beschaffenheit ist, dass die rohrförmige Struktur (10a), vor dem Schritt d), an ihren axialen äußeren Enden (11) eine Dicke aufweist, die kleiner ist als die Dicke eines axial inneren Abschnitts (12) derselben,
   wobei Schritt e) einen Unterschritt des Auflegens eines kontinuierlichen langgestreckten Elements (20) aus elastomerem Material auf einer im Wesentlichen zylindrischen Formungstrommel umfasst, wobei das langgestreckte Element eine Abfolge von Wicklungen um die Trommel (21) definiert,
   wobei die Anfangsdicke durch Variieren der gegenseitigen Überlappungen der Wicklungen (21) entlang der axialen Erstreckung der rohrförmigen Struktur (10a) gewonnen wird.

2. Verfahren nach Anspruch 1, bei dem die Dicke eine Variation aufweist, die zwischen ungefähr 0.01 % und ungefähr 5 % eingeschlossen ist.

3. Verfahren nach Anspruch 1, bei dem die Dicke eine Variation aufweist, die zwischen ungefähr 0.01 % und ungefähr 2 % eingeschlossen ist.

4. Verfahren nach einem der Ansprüche 1-3, bei dem die vorstehend erwähnte rohrförmige Struktur (10a, 10b) eine Schicht (8) ist, die zu der Karkassenstruktur (2) gehört.

5. Verfahren nach einem der Ansprüche 1-3, bei dem die rohrförmige Struktur (10a, 10b) eine Unterschicht ist, die zu der Karkassenstruktur (2) gehört.

6. Verfahren nach einem der Ansprüche 1-3, bei dem die rohrförmige Struktur (10a, 10b) eine Unterschicht (3c) der Gürtelstruktur (3) ist.

7. Verfahren nach einem der Ansprüche 1-3, bei dem die rohrförmige Struktur (10a, 10b) eine Unterschicht (4a) des Laufflächenbands (4) ist.

8. Verfahren nach einem der Ansprüche 1 bis 3, bei dem die rohrförmige Struktur (10a, 10b) das Laufflächenband (4) ist.

9. Verfahren nach einem der Ansprüche 1 bis 3, bei dem die rohrförmige Struktur (10a, 10b) mindestens ein Abschnitt einer Seitenwand (5) ist.

10. Verfahren nach Anspruch 1, bei dem die Anfangsdicke durch Variieren einer Spannung, mit der das kontinuierliche langgestreckte Element (20) auf die Formungstrommel gelegt wird, entlang einer axialen Erstreckung der rohrförmigen Struktur (10a) gewonnen wird,.

11. Verfahren nach einem der vorstehenden Ansprüche, bei dem die Anfangsdicke, nach dem Formungsschritt, in Abhängigkeit des Anfangsradius der undeformierten rohrförmigen Struktur (10a) und eines Radius der deformierten rohrförmigen Struktur (10b) bestimmt wird.

12. Verfahren nach Anspruch 11, bei dem die Anfangsdicke in Abhängigkeit einer Differenz des Absolutwerts zwischen einem Anfangsradius (R1) der rohrförmigen Struktur (10a), bei einem Anfangsvolumenelement (E1) abgeschätzt, das Teil der rohrförmigen Struktur (10a) ist, und einem Radius der deformierten Struktur (10b), bei einem deformierten Volumenelement (E2) abgeschätzt, das durch Deformieren des Anfangsvolumenelements (E1) erzeugt wird, bestimmt wird.

13. Verfahren nach Anspruch 11, bei dem die Anfangsdicke in Abhängigkeit eines Verhältnisses eines Anfangsradius (R1) der rohrförmigen Struktur (10a), bei einem Anfangsvolumenelement (E1) abgeschätzt, das Teil der rohrförmigen Struktur (10a) ist, zu einem Radius der deformierten Struktur (10b), bei einem deformierten Volumenelement (E2) abgeschätzt, das durch Deformieren des Anfangsvolumenelements (E1) erzeugt wird, bestimmt wird.

14. Verfahren nach Anspruch 13, bei dem die Anfangsdicke gemäß der Beziehung:

$$S_1 = S_2 \cdot \frac{R2}{R1}$$

bestimmt wird, wobei:

S1 die Dicke des undeformierten Volumenelements (E1) darstellt;
S2 die Dicke des deformierten Volumenelements (E2) darstellt;
R1 den Anfangsradius der deformierten rohrförmigen Struktur (10a) darstellt, bei dem undeformierten Volumenelement (R1) abgeschätzt;
R2 den Radius der deformierten rohrförmigen Struktur (10b) darstellt, bei dem deformierten Volumenelement (E2) abgeschätzt.

15. Verfahren nach Anspruch 13, bei dem die Anfangsdicke gemäß der Beziehung:

$$S_1 = S_2 \cdot \sqrt{\frac{R2}{R1}}$$

bestimmt wird, wobei:

S1 die Dicke des undeformierten Volumenelements (E1) darstellt;
S2 die Dicke des deformierten Volumenelements (E2) darstellt;
R1 den Anfangsradius der deformierten rohrförmigen Struktur (10a) darstellt, bei dem undeformierten Volumenelement (R1) abgeschätzt;
R2 den Radius der deformierten rohrförmigen Struktur (10b) darstellt, bei dem deformierten Volumenelement (E2) abgeschätzt.

16. Verfahren nach einem der vorstehenden Ansprüche, wobei der Schritt c) nach dem Schritt b) stattfindet, indem das Laufflächenband (4) direkt über der Gürtelstruktur (3) angelegt wird.

17. Verfahren nach einem der vorstehenden Ansprüche, wobei Schritt c) nach dem Schritt d) stattfindet, indem das Laufflächenband (4) direkt über der Gürtelstruktur (3) angelegt wird, die eine Torusgestalt aufweist und bereits mit der Karkassenstruktur (2) assoziiert ist.

18. Verfahren nach Anspruch 16, wobei im Schritt d) die Karkassenstruktur (2) durch Einnehmen einer Torusgestalt mit der Gürtelstruktur (3) - Laufflächenband (4) - Anordnung assoziiert wird.

**Revendications**

1. Procédé de fabrication de pneus pour roues de véhicule, ledit procédé comprenant les étapes suivantes :

a) construire une structure de carcasse (2) ;
b) construire une structure de ceinture (3) ;
c) construire une bande de roulement (4) ;
dans lequel au moins l'une parmi la structure de carcasse (4), structure de ceinture (3) et bande de roulement (4) comprend une structure tubulaire (10a, 10b) de matériau élastomère ;
d) mettre en forme ladite structure de carcasse (2) dans une conformation toroïdale pour l'associer avec au moins ladite structure de ceinture (3) en exerçant une force radiale de déformation dirigée depuis l'intérieur vers l'extérieur de ladite structure de carcasse (2) ; ledit procédé comprenant l'étape suivante, au cours de l'exécution d'au moins une des étapes a), b) et c) :
e) construire ladite structure tubulaire (10a, 10b) de sorte que le profil de celle-ci, le long de son étendue circonférentielle, a une épaisseur de départ telle que la structure tubulaire déformée (10d) après l'étape d) a une épaisseur présentant une variation comprise entre environ 0,01% et environ 12%
dans lequel ladite épaisseur de départ dudit profil (P1) est d'une nature telle que la structure tubulaire (10a), avant l'étape d), a une épaisseur en ses extrémités axialement externes (11), qui est plus petite que l'épaisseur d'une partie axialement interne (12) de celle-ci, dans lequel ladite étape e) comprend une sous-étape de fixer un élément allongé continu (20) en matériau élastomère sur un tambour de formage sensiblement cylindrique, lequel élément allongé définit une succession de spires (21) autour dudit tambour,

dans lequel ladite épaisseur de départ est obtenue en faisant varier le chevauchement mutuel desdites spires (21) le long de l'étendue axiale de la structure tubulaire (10a)

2. Procédé selon la revendication 1, dans lequel ladite épaisseur a une variation comprise entre environ 0,01% et environ 5%.

3. Procédé selon la revendication 1, dans lequel ladite épaisseur a une variation comprise entre environ 0.01% et environ 2%.

4. Procédé selon l'une quelconque des revendications 1 à 3, dans lequel la structure tubulaire susmentionnée (10a, 10b) est un revêtement (8) appartenant à ladite structure de carcasse (2).

5. Procédé selon l'une quelconque des revendications 1 à 3, dans lequel ladite structure tubulaire (10a, 10b) est un sous-revêtement appartenant à ladite structure de carcasse (2).

6. Procédé selon l'une quelconque des revendications 1 à 3, dans lequel ladite structure tubulaire (10a, 10b) est une sous-couche de la structure de ceinture (3).

7. Procédé selon l'une quelconque des revendications 1 à 3, dans lequel ladite structure tubulaire (10a, 10b) est une sous-couche de la bande de roulement (4).

8. Procédé selon l'une quelconque des revendications 1 à 3, dans lequel ladite structure tubulaire (10a, 10b) est la bande de roulement (4).

9. Procédé selon l'une quelconque des revendications 1 à 3, dans lequel ladite structure tubulaire (10a, 10b) est au moins une partie d'un flanc (5).

10. Procédé selon la revendication 1, dans lequel ladite épaisseur de départ est obtenue en faisant varier le long de l'étendue axiale de la structure tubulaire (10a), une tension avec laquelle ledit élément allongé continu (20) est fixé sur ledit tambour de formage.

11. Procédé selon l'une quelconque des revendications précédentes, dans lequel ladite épaisseur de départ est déterminée en fonction du rayon de départ de ladite structure tubulaire non déformée (10a) et d'un rayon de ladite structure tubulaire déformée (10b), après ladite étape de mise en forme.

12. Procédé selon la revendication 11, dans lequel ladite épaisseur de départ est déterminée en fonction d'une différence en valeur absolue entre un rayon de départ (R1) de ladite structure tubulaire (10a), estimée sur un élément de volume de départ (E1) faisant partie de ladite structure tubulaire (10a), et un rayon de ladite structure déformée (10b), estimé sur un élément de volume déformé (E2) obtenu par déformation dudit élément de volume de départ (E1).

13. Procédé selon la revendication 11, dans lequel ladite épaisseur de départ est déterminée en fonction d'un rapport d'un rayon de départ (R1) de ladite structure tubulaire (10a), estimé sur un élément de volume de départ (E1) faisant partie de ladite structure tubulaire (10a), sur un rayon de ladite structure déformée (10b), estimé sur un élément de volume déformé (E2) obtenu par déformation dudit élément de volume de départ (E1).

14. Procédé selon la revendication 13, dans lequel ladite épaisseur de départ est déterminée selon la relation :

$$S_1 = S_2 \cdot \frac{R2}{R1}$$

dans laquelle :
$S_1$ est l'épaisseur de l'élément de volume non déformé (E1) ;
$S_2$ est l'épaisseur de l'élément de volume déformé (E2) ;
R1 est le rayon de départ de la structure tubulaire non déformée (10a) estimée sur l'élément de volume non déformé (E1) ;
R2 est le rayon de la structure tubulaire déformée (10b) estimé sur l'élément de volume déformé (E2).

15. Procédé selon la revendication 13, dans lequel ladite épaisseur de départ est déterminée selon la relation :

$$S_1 = S_2 \cdot \sqrt{\frac{R2}{R1}}$$

dans laquelle :
$S_1$ est l'épaisseur de l'élément de volume non déformé (E1) ;
$S_2$ est l'épaisseur de l'élément de volume déformé (E2) ;

R1 est le rayon de départ de la structure tubulaire non déformée (10a) estimée sur l'élément de volume non déformé (E1) ;

R2 est le rayon de la structure tubulaire déformée (10b) estimé sur l'élément de volume déformé (E2).

16. Procédé selon l'une quelconque des revendications précédentes, dans lequel ladite étape c) est réalisée après ladite étape b) en construisant ladite bande de roulement (4) directement sur ladite structure de ceinture (3).

17. Procédé selon l'une quelconque des revendications précédentes, dans lequel ladite étape c) est réalisée après ladite étape d) en construisant ladite bande de roulement (4) directement sur ladite structure de ceinture (3) ayant une conformation toroïdale et préalablement associée avec ladite structure de carcasse (2).

18. procédé selon la revendication 16, dans lequel au cours de ladite étape d) ladite structure de carcasse (2) en prenant une conformation toroïdale est associée à l'assemblage structure de ceinture (3) - bande de roulement (4).

FIG 1

# FIG 2a

S  P1  10a

11  12  11

# FIG 2b

10b  P2

# FIG 3a

100  Y

Prior art

# FIG 3b

Y2

Y1

Prior art

EP 2 212 102 B1

FIG 4

FIG 5

FIG 6

EP 2 212 102 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3990931 A
- US 4065338 A
- US 6482282 B
- WO 0030838 A
- EP 0264506 A
- US 6261399 B
- JP 9239861 B
- WO 0136185 A